# NEW EUROPEAN PATENT SPECIFICATION

(11) **EP 3 421 414 B2**
(45) Date of publication and mention of the opposition decision: **24.04.2024**
(45) Mention of the grant of the patent: 21.04.2021
(21) Application number: 17178517.3
(22) Date of filing: 28.06.2017
(51) Int. Cl.: B67D 3/00, B67D 1/08, B67D 1/12, G01F 23/292, G01F 23/20

(54) **LIQUID DISPENSING SYSTEM AND METHOD AND RECEPTACLE THEREFOR**
FLÜSSIGKEITSABGABESYSTEM UND VERFAHREN UND BEHÄLTER DAFÜR
SYSTÈME ET PROCÉDÉ DE DISTRIBUTION DE LIQUIDE ET RÉCIPIENT ASSOCIÉ

(43) Date of publication of application: 02.01.2019
(73) Proprietor: Vestel Elektronik Sanayi ve Ticaret A.S., 45030 Manisa (TR)
(72) Inventor: AKGÜL, Burak, 45030 Manisa (TR)
(74) Representative: Page White Farrer

(56) References cited:
- WO-A1-2016/029294
- WO-A1-2016/191748
- WO-A1-2016/201305
- WO-A1-2017/149049
- CN-A- 104 720 592
- CN-A- 105 030 063
- CN-U- 204 049 290
- KR-A- 20170 033 184
- KR-B1- 101 183 231
- US-A1- 2005 087 255
- US-A1- 2010 187 298

## Description

### Technical Field

The present disclosure relates to a liquid dispensing system and method, and to receptacle for use in such systems and methods.

### Background

Liquid dispensing systems are widely used. They comprise a liquid dispenser which may be capable of dispensing different beverages and hot or cold water. Some liquid dispensing systems have a liquid dispenser which dispenses only water, either hot or cold. The hot water may be dispensed into a receptacle provided at a dispenser, which could contain tea leaves or coffee powder to which the water is added to make a beverage.

Such dispensers have a nozzle which dispenses water. Some dispensers operate such that when a user pushes a button, water is dispensed for as long as the button is pushed. Effectively, the nozzle is manually controlled by the user. In other system, the user may press a button once, and a predetermined quantity of water is then dispensed into a receptacle placed below the nozzle. That quantity of water is determined by the water dispenser. The button may be a mechanical push button, or an icon on a user interface which actuates a controller to automatically dispense the water.

WO2016191748A1 discloses a beverage dispenser which can include smartcups and smartcup application management systems configured to validate and identify smartcups for dispensing a beverage.

WO2016201305A1 discloses a portable, self-contained beverage apparatus which includes a container assembly having a known storage capacity for storing a consumable liquid, and a dispensing assembly disposed within the container assembly that dispenses variable, non-zero quantities of additives into the consumable liquid.

### Summary

According to a first aspect disclosed herein, there is provided in combination, a receptacle and a liquid dispensing system for dispensing a liquid from a dispenser into the receptacle,
the receptacle being shaped to hold the liquid dispensed into it and comprising:
a receiver arranged to receive from the dispenser an indication of a liquid parameter of a liquid to be dispensed;
a local store which holds density of different beverage types;
a weight sensor
a processor configured to determine a volume of the liquid received at the receptacle from the dispenser by accessing a density for the liquid based on the liquid parameter from the local store, receiving data of the received weight of the liquid from the weight sensor and calculating the volume from the density and the received weight; and
a transmitter arranged to transmit a stop signal to the dispenser to cause the flow of the liquid to be interrupted when it is determined by the processor based on the received weight of the liquid that a pre-determined volume of the liquid specific to the receptacle size has been received;
the liquid dispensing system comprising:
   a dispenser controllable to dispense the liquid into the receptacle;
   means for supporting the receptacle at a location to receive the liquid dispensed from the dispenser;
   a communication module configured to transmit data to the receptacle located on the supporting means and to receive messages from the receptacle; and
   a controller coupled to the communication module and operable to control the dispenser to dispense the liquid;
   wherein one of the messages comprises the stop signal, transmitted from the receptacle when it is determined that the pre-determined volume of the liquid specific to the receptacle size has been received at the receptacle, wherein the controller is configured to cause a flow of the liquid to the receptacle to be interrupted responsive to receipt of the stop signal from the receptacle.

According to a second aspect disclosed herein, there is provided a method of dispensing a liquid from a dispenser into a receptacle, the method comprising:
receiving, from the dispenser, at the receptacle an indication of a liquid parameter of the liquid to be dispensed;
receiving the liquid into the receptacle from the dispenser;
determining by a processor at the receptacle a volume of the liquid received at the receptacle from the dispenser by accessing a density for the liquid based on the liquid parameter from a local store at the receptacle which holds density of different beverage types, receiving data of the received weight of the liquid from a weight sensor at the receptacle and calculating the volume from the density and the received weight; and
transmitting a stop signal to the dispenser to cause the flow of the liquid to be interrupted when it is determined by the processor at the receptacle based on the received weight of the liquid that a pre-determined volume of the liquid specific to the receptacle size has been received into the receptacle.

According to a third aspect disclosed therein, there is provided a receptacle for use with a liquid dispensing system comprising a dispenser controllable to dispense a liquid into the receptacle, the receptacle being shaped to hold the liquid dispensed into it and comprising:
a receiver arranged to receive from the dispenser an indication of a liquid parameter of a liquid to be dispensed;
a local store which holds density of different beverage types;
a weight sensor;
a processor configured to determine a volume of the liquid received at the receptacle from the dispenser by accessing a density for the liquid based on the liquid parameter from the local store, receiving data of the received weight of the liquid from the weight sensor and calculating the volume from the density and the received weight; and
a transmitter arranged to transmit a stop signal to the dispenser to cause the flow of the liquid to be interrupted when it is determined by the processor based on the received weight of the liquid that a pre-determined volume of the liquid specific to the receptacle size has been received.

There is also described herein a method of dispensing liquid from a dispenser into a receptacle, not forming part of the invention as claimed in the independent claims, the method comprising:
receiving a selection from a user of a liquid parameter of the liquid to be dispensed;
receiving, from a transmitter on a receptacle a user identifier which identifies the user;
transmitting from the receptacle to the dispenser information relating to a quantity of liquid to be consumed by the user in a pre-determined period;
providing to a user an indication of a remaining quantity to be consumed by the user based on the difference between a pre-determined quality and any volume dispensed already in the pre-determined period.

The communication module which permits data and messages to be exchanged between the receptacle and the controller of the liquid dispensing system enables the receptacle to issue a stop signal when the volume of liquid received in the receptacle has reached a threshold level. In this case, the controller can be configured to cause a flow of liquid to be interrupted responsive to the stop signal. The stop signal can be provided by one of the messages transmitted from the receptacle to the liquid dispensing system.

According to another function, the system comprises a user interface operable to receive a selection from a user of a liquid parameter of the liquid to be dispensed and for supplying an indication to the controller.

According to another function, the controller may be operable to receive information relating to a quantity of liquid to be consumed by a user of the receptacle in a pre-determined period, wherein the user interface is arranged to provide to the user an indication of remaining quantities to be consumed by the user based on the difference between a pre-determined quantity and any volume dispensed already in the pre-determined period. To implement this feature, the receptacle can comprise a user identifier uniquely identifying a user of the receptacle, wherein the transmitter on the receptacle is operable to transmit to the dispenser information relating to a quantity of liquid to be consumed by the user in a predetermined period.

The transmitter can be operable to transmit a start signal to the dispenser to cause the flow of liquid to commence.

By accessing a density for the liquid, for example based on the liquid parameter, in a local store, receiving data of the received weight of the liquid from a weight sensor at the receptacle and calculating the volume from the density and the received weight, the receptacle accurately calculates volumes for different types of beverage and different temperatures of water.

### Brief Description of the Drawings

To assist understanding of the present disclosure and to show how embodiments may be put into effect, reference is made by way of example to the accompanying drawings in which:
Figure 1 is a schematic block diagram of a liquid dispensing system;
Figure 2 is a flowchart showing operation of a liquid dispensing system; and
Figure 3 is a schematic block diagram of a control module for a receptacle.

### Detailed Description

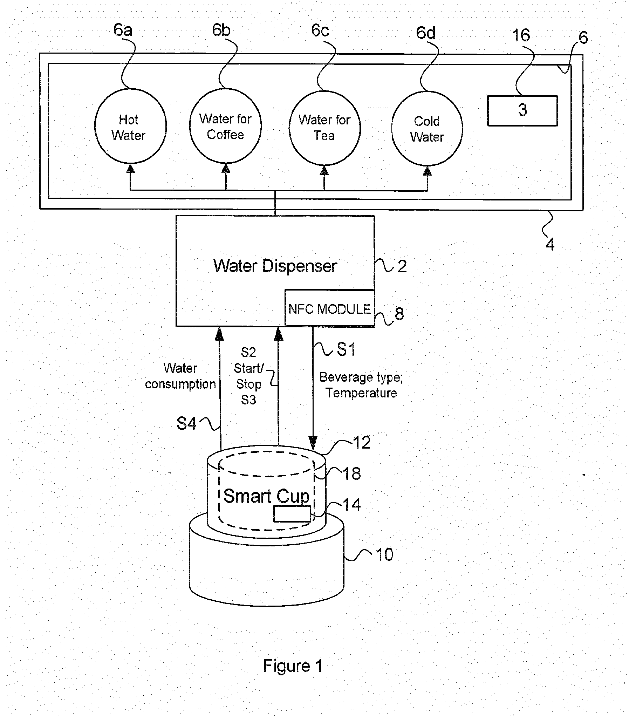

Figure 1 is a schematic block diagram of a liquid dispensing system, sometimes referred to herein as a smart drinking set. The liquid dispensing system comprises a dispenser 2 which in the case of the described embodiment, is a water dispenser. It will be appreciated, however, that other liquids may be dispensed in accordance with the techniques described herein. The water dispenser 2 is associated with a controller 4 which provides a graphical user interface (GUI) 6. The user interface may be in the form of a Liquid Crystal Display (LCD), or any other suitable form. The display offers selections to a user, in the form of selectable icons for example. Selectable icons shown in Figure 1 include hot water 6a, water for coffee 6b, water for tea 6c, cold water 6d. The user selected choice controls the water dispenser to serve water according to the user preferred temperature. For instance, the water may be dispensed at 80 degree for coffee, 90 degree for tea and 25 degree for drinking water. The water dispenser 2 comprises a Near-Field Communication (NFC) module 8. While an NFC module is described herein, it will be appreciated that any other form of communication module could be utilised to implement the techniques described herein. For example, Wi-Fi, RFID, Bluetooth and other short-range wireless communication chips could be utilised. In some circumstances, other types of mobile transmitters could be utilised. What is important is that the NFC module 8 is capable of transmitting a signal which provides data from the water dispenser 2, and receiving messages from a receptacle.

The liquid dispensing system also includes a receptacle support 10, and a receptacle 12. The receptacle 12 can be placed on the support 10 and removed from the support 10 by a user. The support 10 is located under a dispensing nozzle from the water dispenser 2 such that when the receptacle 12 is placed on the support 10, it is located to receive water from the dispenser 2. The dispensing nozzle is not shown, as any suitable nozzle could be utilised. The receptacle 12 is referred to herein as a smart cup. The smart cup 12 incorporates a control module 14 which permits an exchange of signals between the receptacle and the dispenser controller 4, via the NFC module 8. The control module 14 is configured to control the functionality of the water dispenser 2 responsive to signals received from the NFC module 8 when the smart cup is in the vicinity of the NFC module 8. The arrangement could be such that the signals are only received from the NFC nozzle 8 at the smart cup 12 when it is correctly located to receive water from the water dispenser 2. When the smart cup is placed on the support 10 at the water dispenser, it receives a signal from the NFC module 8 which includes beverage type and temperature data. The signal is labelled S1 in Figure 1. The smart cup 12 sends a signal to the water dispenser to cause it to start the water flow. This signal is labelled S2 in Figure 1. Although shown diagrammatically in Figure 1 as being received at the water dispenser, in fact the signal is received via the NFC module at the controller 4 which forms part of the water dispenser and controls the nozzle so as to activate the water flow.

The control module at the smart cup provides a number of different functions.

According to one function, it enables the volume of liquid which is being dispensed into the smart cup to be determined, such that the smart cup 12 can send a message to the water dispenser ordering it to cut the water flow when a pre-determined volume threshold has been reached. This signal is labelled the stop signal S3 in Figure 1.

According to another function, the control module 14 provides a signal S4 to the water dispenser with information about the user's water consumption. This can be user at the controller 4 of the water dispenser to show to a user how much more water a user needs to drink daily. For example, it could display in a field 16 the number of glasses (e.g. 3) more that the user needs to drink for that day. To achieve this, each smart cup has an identifier ID associating it with a particular user. In one embodiment, the information could be provided to a user in an audible form rather than by a display.

According to the first function therefore, the smart cup 12 itself controls operation of the water dispenser, rather than the operation being controlled by the water dispenser. This enables the smart cup to control the volume of liquid which it receives, such that that volume can be made specific to the receptacle size and/ or the user requirement. Note that the smart cup 12 itself may have an internal vessel 18 arranged to receive liquid and to be used for drinking by a user. This would allow the control module 14 to be built into an external casing which houses the internal vessel. An internal vessel is shown dotted designated by reference numeral 18 in Figure 1.

Alternatively, the control module 14 could be integrated into the drinking vessel itself.

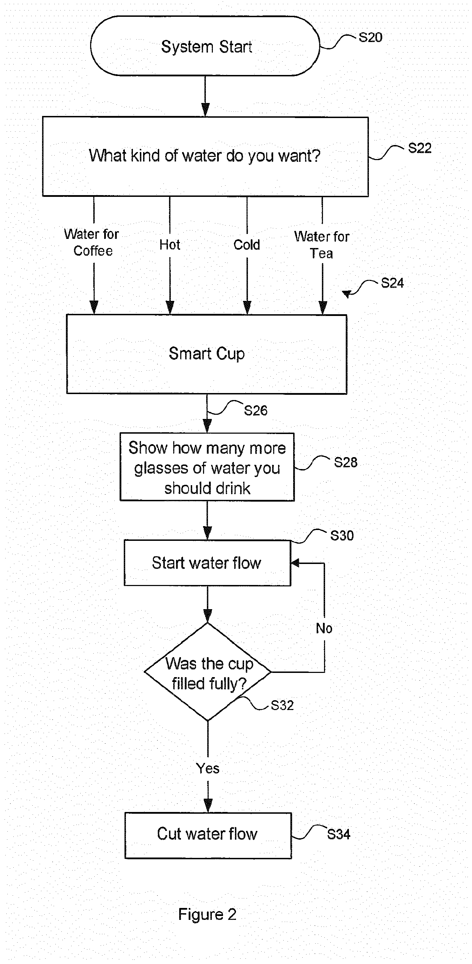

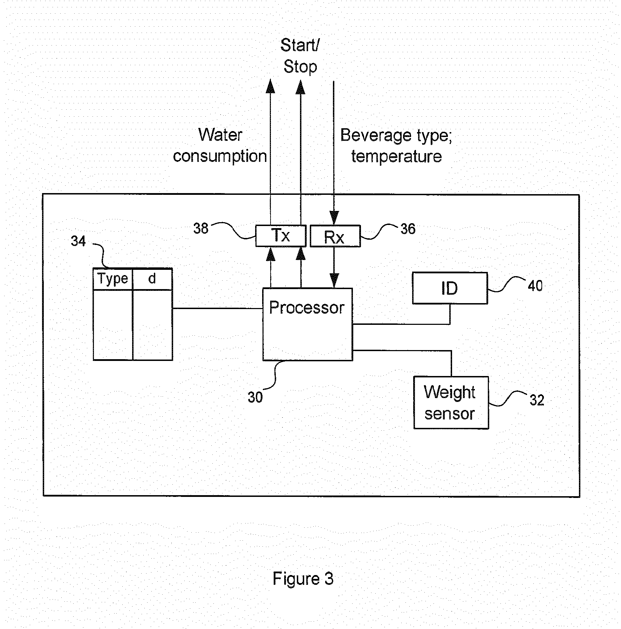

Figure 2 shows a schematic flowchart illustrating these functions in the water dispensing system. At step S20 the system starts. At step S22, options for the beverage type that the user may select are presented on the user interface 6 for the user to make a selection. Step S24 illustrates the step of receiving at the smart cup the signal S 1 from the NFC module 8 with the beverage type and temperature data. In Figure 2, four lines are shown to represent four possible selections, but in practice a signal S1 identifying one of the selections would be provided to the smart cup 12. The signal S1 transmitted from the NFC module 8 is received at the control module 14 by a receiver in the control module. The details of the control module are illustrated in Figure 3 and described later. At step S26, the smart cup sends a signal to the water dispenser about the user's water consumption, and at step S28 the water dispenser shows how many glasses more the user need to drink for the day.

After the user has made the selection, the water dispenser waits until the temperature is cold/ hot enough. It will be appreciated that the water dispenser incorporates heating and/ or cooling arrangements with temperature sensors for this. At step S30, the smart cup sends a signal to the water dispenser to start the water flow. Flow commences when the water temperature is ready for consumption. At step S32, the smart cup continues to receive water and to check the received water volume against a water volume threshold suitable to the size of the smart cup. For as long as the volume received at the smart cup is less than a threshold, a 'no' signal is returned to step S30 and the nozzle remains controlled "on" to continue water flow. Once a threshold has been reached, a 'yes' signal is supplied to step S34 which causes the smart cup to send a message S3 to the water dispenser to cut the water flow by controlling the nozzle "off'.

Reference will now be made to Figure 3 to describe the control module on the smart cup 2, and also the manner in which the volume contained in the smart cup is calculated. The control module 14 comprises a processor 30 which can receive data from a weight sensor 32 which monitors the weight of water received at the smart cup The control module 14 has a store 34 which holds density of different beverage types. The store can be implemented in any type of computer or electronic memory. The processor 30 can access the density of the selected beverage type from the store 34. In this way, the smart can calculate the water volume relative to the beverage type by using the formula d = m/V where d is the density, m is the mass as determined by the weight sensor and V is the volume. The store 34 may also hold a volume threshold relating to the smart cup which control when the water flow is to be cut off. The processor 30 carries out steps S30, S32 and S34 shown in Figure 2. The control module 14 has a receiver 36 and a transmitter 38. These can be implemented in any suitable fashion to communicate with the NFC module 8 or its equivalent. Signals received by the receiver 36 are supplied to the processor 30. The processor 30 generates signals to be transmitted from the transmitter 38. These incudes the start/stop signals S2, S3 and the water consumption signal S4. The control module 14 also includes a user ID 40 such that the smart cup is defined to each user, each of them having different ID's to identify different users. Different users may have different water consumption requirements, and the user ID can be used to determine a pre-determined quantity of water to be consumed in a certain period, such as a day. This information can be supplied to the water dispenser for display to a user at the GUI 6.

The processor 30 on the smart cup 12 can determine pre-determined periods and can store the volumes of liquid which have been dispensed into the smart cup within that period. This enables it to supply water consumption signal S4 to the water dispenser so that the remaining number of glasses to be consumed by a user can be displayed in the field 16.

Alternatively, this functionality could be shared between the smart cup and the controller 4 of the water dispenser. For example, the smart cup could send the user ID with the current volume of water in the smart cup, such that the water dispenser could determine for each user how much more water needs to be consumed by that user. The determined value could then be displayed to the user on the user interface 6.

The liquid dispensing system described herein addresses a number of disadvantages with existing systems. Some regular water dispensers have only cold and hot options, and they are not 'smart' which can make getting a cup of water both a tiring and time consuming process. Existing water dispensers cannot sense whether a cup is full, and therefore do not have the ability to cut the water flow automatically based on the cup itself. Furthermore, water dispensers cannot be customised for users' own preferences, meaning they do not recognise the user or the cup and are therefore unable to take actions responsive to the particular user or a particular cup.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors and a digital signal processor or processors, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

The examples described herein are to be understood as illustrative examples of embodiments of the invention. Furthermore, equivalents and modifications not described herein may also be employed within the scope of the invention, which is defined in the claims.

## Claims

1. In combination, a receptacle (12) and a liquid dispensing system for dispensing a liquid from a dispenser (2) into the receptacle (12),
the receptacle (12) being shaped to hold the liquid dispensed into it and comprising:
a receiver arranged to receive from the dispenser (2) an indication of a liquid parameter of a liquid to be dispensed;
a local store (34) which holds density of different beverage types;
a weight sensor (32);
a processor configured to determine a volume of the liquid received at the receptacle (12) from the dispenser (2) by accessing a density for the liquid based on the liquid parameter from the local store (34), receiving data of the received weight of the liquid from the weight sensor (32) and calculating the volume from the density and the received weight; and
a transmitter arranged to transmit a stop signal to the dispenser (2) to cause the flow of the liquid to be interrupted when it is determined by the processor based on the received weight of the liquid that a pre-determined volume of the liquid specific to the receptacle size has been received;
the liquid dispensing system comprising:
a dispenser (2) controllable to dispense the liquid into the receptacle (12); means (10) for supporting the receptacle (12) at a location to receive the liquid dispensed from the dispenser (2);
a communication module (8) configured to transmit data to the receptacle (12) located on the supporting means (8) and to receive messages from the receptacle (12); and
a controller (4) coupled to the communication module (8) and operable to control the dispenser (2) to dispense the liquid;
wherein one of the messages comprises the stop signal, transmitted from the receptacle (12) when it is determined that the pre-determined volume of the liquid specific to the receptacle size has been received at the receptacle (12), wherein the controller (4) is configured to cause a flow of the liquid to the receptacle (12) to be interrupted responsive to receipt of the stop signal from the receptacle (12).

2. A combination according to claim 1, wherein the communications module (8) operates according to a short range wireless communications protocol.

3. A combination according to any preceding claim, the liquid dispensing comprising a user interface (8) operable to receive a selection from a user of a liquid parameter of the liquid to be dispensed and for supplying an indication to the controller (4).

4. A combination according to claim 3, wherein the controller (4) is operable to receive information relating to a quantity of liquid to be consumed by a user of the receptacle (12) in a pre-determined period, wherein the user interface (8) is arranged to provide to the user an indication of a remaining quantity to be consumed by the user based on the difference between a pre-determined quantity and any volume dispensed already in the predetermined period.

5. A method of dispensing a liquid from a dispenser (2) into a receptacle (12), the method comprising:
receiving, from the dispenser (2), at the receptacle (12) an indication of a liquid parameter of the liquid to be dispensed;
receiving the liquid into the receptacle (12) from the dispenser (2);
determining by a processor at the receptacle (12) a volume of the liquid received at the receptacle (12) from the dispenser (2) by accessing a density for the liquid based on the liquid parameter from a local store (34) at the receptacle (12) which holds density of different beverage types, receiving data of the received weight of the liquid from a weight sensor (32) of the receptacle (12) and calculating the volume from the density and the received weight; and
transmitting a stop signal to the dispenser (2) to cause the flow of the liquid to be interrupted when it is determined by the processor at the receptacle (12) based on the received weight of the liquid that a pre-determined volume of the liquid specific to the receptacle size has been received into the receptacle (12).

6. A method according to claim 5, comprising the step of, prior to receiving liquid into the receptacle (12), transmitting from the receptacle (12) a start signal to the dispenser (2) to cause the flow of liquid to commence.

7. A method according to any preceding claim, comprising the step of receiving a user input selecting a liquid parameter of the liquid to be dispensed.

8. A method according to any preceding claim, comprising the steps of:
receiving from a transmitter on the receptacle (12) a user identifier which identifies the user;
transmitting from the receptacle (12) to the dispenser (2) information relating to a quantity of liquid to be consumed by the user in a predetermined period; and
providing to a user an indication of a remaining quantity to be consumed by the user based on the difference between a pre-determined quantity any volume dispensed already in the pre-determined period.

9. A receptacle (12) for use with a liquid dispensing system comprising a dispenser (2) controllable to dispense a liquid into the receptacle (12), the receptacle (12) being shaped to hold the liquid dispensed into it and comprising:
a receiver arranged to receive from the dispenser (2) an indication of a liquid parameter of a liquid to be dispensed;
a local store (34) which holds density of different beverage types;
a weight sensor (32);
a processor configured to determine a volume of the liquid received at the receptacle (12) from the dispenser (2) by accessing a density for the liquid based on the liquid parameter from the local store (34), receiving data of the received weight of the liquid from the weight sensor (32) and calculating the volume from the density and the received weight; and
a transmitter arranged to transmit a stop signal to the dispenser (2) to cause the flow of the liquid to be interrupted when it is determined by the processor based on the received weight of the liquid that a pre-determined volume of the liquid specific to the receptacle size has been received.

10. A receptacle (12) according to claim 9, wherein the transmitter is operable to transmit a start signal to the dispenser (2) to cause the flow of liquid to commence.

11. A receptacle (12) according to claim 9 or claim 10, comprising a user identifier uniquely identifying a user of the receptacle (12), wherein the transmitter is operable to transmit from the receptacle (12) to the dispenser (2) information relating to a quantity of liquid to be consumed by the user in a pre-determined period.

## Patentansprüche

1. Kombination eines Behälters (12) und eines Flüssigkeitsspendesystems zum Spenden einer Flüssigkeit von einem Spender (2) in den Behälter (12),
wobei der Behälter (12) geformt ist, um die in ihm abgegebene Flüssigkeit zu halten, und aufweist:
einen Empfänger, der eingerichtet ist, um vom Spender (2) einen Hinweis eines Flüssigkeitsparameters einer zu spendenden Flüssigkeit zu empfangen;
einen lokalen Speicher (34), der die Dichte verschiedener Getränketypen enthält; einen Gewichtssensor (32);
einen Prozessor, der konfiguriert ist, um ein Volumen der vom Spender (2) am Behälter (12) empfangenen Flüssigkeit zu bestimmen durch Zugreifen einer Dichte für die Flüssigkeit basierend auf dem Flüssigkeitsparameter vom lokalen Speicher (34), Empfangen von Daten des empfangenen Gewichts der Flüssigkeit vom Gewichtssensor (32) und Berechnen des Volumens aus der Dichte und dem empfangenen Gewicht; und
einen Sender, der eingerichtet ist, um ein Stoppsignal an den Spender (2) zu senden, um den Flüssigkeitsstrom abbrechen zu lassen, wenn durch den Prozessor basierend auf dem empfangenen Gewicht der Flüssigkeit ermittelt wird, dass ein vorbestimmtes Flüssigkeitsvolumen, das für die Behältergröße spezifisch ist, empfangen worden ist;
wobei das Flüssigkeitsspendesystem aufweist:
einen Spender (2), der ansteuerbar ist, um die Flüssigkeit in den Behälter (12) zu spenden;
Einrichtung (10) zum Tragen des Behälters (12) an einer Stelle, um die vom Spender (2) gespendete Flüssigkeit aufzunehmen;
ein Kommunikationsmodul (8), das konfiguriert ist, um Daten an den auf der Trägereinrichtung (8) liegenden Behälter (12) zu senden und Nachrichten vom Behälter (12) zu empfangen; und
eine Steuerung (4), die mit dem Kommunikationsmodul (8) gekoppelt ist und betreibbar ist, um den Spender (2) anzusteuern, um die Flüssigkeit zu spenden; wobei eine der Nachrichten das Stoppsignal aufweist, das vom Behälter (12) übertragen wird, wenn ermittelt wird, dass das vorbestimmte Flüssigkeitsvolumen, das für die Behältergröße spezifisch ist, am Behälter (12) empfangen wurde, wobei die Steuerung (4) konfiguriert ist, um ein Flüssigkeitsstrom zum Behälter (12) als Reaktion auf den Empfang des Stoppsignals vom Behälter (12) abbrechen zu lassen.

2. Kombination nach Anspruch 1, wobei das Kommunikationsmodul (8) gemäß einem drahtlosen Kommunikationsprotokoll mit kurzer Reichweite arbeitet.

3. Kombination nach einem der vorhergehenden Ansprüche, wobei die Flüssigkeitsspende eine Benutzerschnittstelle (8) aufweist, die betreibbar ist, um eine Auswahl von einem Benutzer eines Flüssigkeitsparameters der zu spendenden Flüssigkeit zu empfangen, und zum Liefern eines Hinweises an die Steuerung (4).

4. Kombination nach Anspruch 3, wobei die Steuerung (4) betreibbar ist, um Informationen bezüglich einer Flüssigkeitsmenge zu empfangen, die von einem Benutzer des Behälters (12) in einer vorbestimmten Zeitdauer zu verbrauchen ist, wobei die Benutzerschnittstelle (8) eingerichtet ist, um dem Benutzer einen Hinweis einer vom Benutzer zu verbrauchenden Restmenge basierend auf der Differenz zwischen einer vorbestimmten Menge und einem bereits in der vorbestimmten Zeitdauer gespendeten Volumen zu liefern.

5. Verfahren zum Spenden einer Flüssigkeit von einem Spender (2) in einen Behälter (12), wobei das Verfahren aufweist:
Empfangen eines Hinweises eines Flüssigkeitsparameters einer zu spendenden Flüssigkeit vom Spender (2) am Behälter (12);
Empfangen der Flüssigkeit in den Behälter (12) vom Spender (2);
Bestimmen eines Volumens der am Behälter (12) vom Spender (2) empfangenen Flüssigkeit durch einen Prozessor am Behälter (12) durch Zugreifen einer Dichte für die Flüssigkeit basierend auf dem Flüssigkeitsparameter von einem lokalen Speicher (34) am Behälter (12), der die Dichte verschiedener Getränketypen enthält, Empfangen von Daten des empfangenen Gewichts der Flüssigkeit von einem Gewichtssensor (32) des Behälters (12) und Berechnen des Volumens aus der Dichte und dem empfangenen Gewicht; und
Senden eines Stoppsignals an den Spender (2), um den Flüssigkeitsstrom abbrechen zu lassen, wenn durch den Prozessor am Behälter (12) basierend auf dem empfangenen Gewicht der Flüssigkeit ermittelt wird, dass ein vorbestimmtes Flüssigkeitsvolumen, das für die Behältergröße spezifisch ist, in den Behälter (12) empfangen worden ist.

6. Verfahren nach Anspruch 5, aufweisend den Schritt, dass vor dem Empfangen von Flüssigkeit in den Behälter (12) vom Behälter (12) ein Startsignal an den Spender (2) gesendet wird, um den Flüssigkeitsstrom beginnen zu lassen.

7. Verfahren nach einem der vorhergehenden Ansprüche, aufweisend den Schritt des Empfangens einer Benutzereingabe, die einen Flüssigkeitsparameter der zu spendenden Flüssigkeit auswählt.

8. Verfahren nach einem der vorhergehenden Ansprüche, aufweisend die Schritte:
Empfangen einer Benutzerkennung, die den Benutzer identifiziert, von einem Sender am Behälter (12);
Senden von Informationen bezüglich einer Flüssigkeitsmenge, die vom Benutzer in einer vorbestimmten Zeitdauer verbraucht werden soll, vom Behälter (12) an den Spender (2); und
einem Benutzer Liefern eines Hinweises einer vom Benutzer zu verbrauchenden Restmenge basierend auf der Differenz zwischen einer vorbestimmten Menge und einem bereits in der vorbestimmten Zeitdauer gespendeten Volumen zu liefern.

9. Behälter (12) zur Verwendung mit einem Flüssigkeitsspendesystem, das einen Spender (2) aufweist, der ansteuerbar ist, um eine Flüssigkeit in den Behälter (12) zu spenden, wobei der Behälter (12) geformt ist, um die in ihn gespendete Flüssigkeit zu halten, und aufweist:
einen Empfänger, der eingerichtet ist, um vom Spender (2) einen Hinweis eines Flüssigkeitsparameters einer abzugebenden Flüssigkeit zu empfangen;
einen lokalen Speicher (34), der die Dichte verschiedener Getränketypen enthält; einen Gewichtssensor (32);
einen Prozessor, der konfiguriert ist, um ein Volumen der vom Spender (2) am Behälter (12) empfangenen Flüssigkeit zu bestimmen durch Zugreifen einer Dichte für die Flüssigkeit basierend auf dem Flüssigkeitsparameter vom lokalen Speicher (34), Empfangen von Daten des empfangenen Gewichts der Flüssigkeit vom Gewichtssensor (32) und Berechnen des Volumens aus der Dichte und dem empfangenen Gewicht; und
einen Sender, der eingerichtet ist, um ein Stoppsignal an den Spender (2) zu senden, um Flüssigkeitsstrom abbrechen zu lassen, wenn durch den Prozessor basierend auf dem empfangenen Gewicht der Flüssigkeit ermittelt wird, dass ein vorbestimmtes Flüssigkeitsvolumen, das für die Behältergröße spezifisch ist, empfangen worden ist.

10. Behälter (12) nach Anspruch 9, wobei der Sender betreibbar ist, um ein Startsignal an den Spender (2) zu senden, um den Flüssigkeitsstrom beginnen zu lassen.

11. Behälter (12) nach Anspruch 9 oder Anspruch 10, aufweisend eine Benutzerkennung, die einen Benutzer des Behälters (12) eindeutig identifiziert, wobei der Sender betreibbar ist, um vom Behälter (12) an den Spender (2) Informationen bezüglich einer vom Benutzer in einer vorbestimmten Zeitdauer zu verbrauchenden Flüssigkeitsmenge zu senden.

## Revendications

1. Combinaison d'un réceptacle (12) et d'un système de distribution de liquide servant à distribuer dans le réceptacle (12) un liquide issu d'un distributeur (2),
le réceptacle (12) étant mis en forme pour contenir à l'intérieur le liquide distribué, et comprenant :
un récepteur qui est agencé de manière à recevoir, du distributeur (2), une indication d'un paramètre de liquide d'un liquide à distribuer ;
une mémoire locale (34) qui stocke la densité de différents types de boissons ;
un capteur de poids (32) ;
un processeur qui est configuré pour déterminer le volume du liquide reçu du distributeur (2) au niveau du réceptacle (12), en ayant accès à la densité du liquide sur la base du paramètre de liquide issu de la mémoire locale (34), en recevant, du capteur de poids (32), des données sur le poids du liquide reçu, et en calculant le volume à partir de la densité et du poids reçu ; et
un émetteur agencé de manière à émettre un signal d'arrêt vers le distributeur (2) pour provoquer l'interruption de l'écoulement du liquide lorsqu'il est déterminé, par le processeur, sur la base du poids du liquide reçu, qu'un volume prédéterminé du liquide spécifique à la taille du réceptacle a été reçu ;
le système de distribution de liquide comprenant :
un distributeur (2) qui peut être commandé pour distribuer le liquide dans le réceptacle (12) ;
un moyen (10) qui sert à supporter le réceptacle (12) à un emplacement permettant de recevoir le liquide distribué par le distributeur (2) ;
un module de communication (8) qui est configuré pour émettre des données vers le réceptacle (12) qui est situé sur le moyen de support (10), et pour recevoir, du réceptacle (12), des messages ; et
un contrôleur (4) qui est couplé au module de communication (8) et qui peut fonctionner pour commander le distributeur (2) pour qu'il distribue le liquide,
dans laquelle l'un des messages comprend le signal d'arrêt qui est émis à partir du réceptacle (12) lorsqu'il est déterminé que le volume prédéterminé du liquide spécifique à la taille du réceptacle a été reçu au niveau du réceptacle (12), dans laquelle le contrôleur (4) est configuré pour provoquer l'interruption de l'écoulement du liquide vers le réceptacle (12) en réponse à la réception du signal d'arrêt en provenance du réceptacle (12).

2. Combinaison selon la revendication 1, dans laquelle le module de communication (8) fonctionne selon un protocole de communication sans fil à courte portée.

3. Combinaison selon l'une quelconque des revendications précédentes, dans laquelle le système de distribution de liquide comprend une interface d'utilisateur (8) qui peut fonctionner pour recevoir, d'un utilisateur, une sélection d'un paramètre de liquide du liquide à distribuer, et pour fournir une indication au contrôleur (4).

4. Combinaison selon la revendication 3, dans laquelle le contrôleur (4) peut fonctionner pour recevoir des informations relatives à une quantité de liquide à consommer par un utilisateur du réceptacle (12) pendant une période prédéterminée, dans laquelle l'interface d'utilisateur (8) est agencée de manière à fournir à l'utilisateur une indication d'une quantité restante à consommer par l'utilisateur sur la base de la différence entre une quantité prédéterminée et tout volume déjà distribué pendant la période prédéterminée.

5. Procédé de distribution dans un réceptacle (12) d'un liquide issu d'un distributeur (2), le procédé consistant à :
recevoir, du distributeur (2), au niveau du réceptacle (12), une indication d'un paramètre de liquide du liquide à distribuer ;
recevoir, du distributeur (2), le liquide dans le réceptacle (12) ;
déterminer, par un processeur, au niveau du réceptacle (12), le volume du liquide reçu du distributeur (2) au niveau du réceptacle (12), en ayant accès à la densité du liquide sur la base du paramètre de liquide issu d'une mémoire locale (34) au niveau du réceptacle (12) qui stocke la densité de différents types de boissons, en recevant, d'un capteur de poids (32) du réceptacle (12), des données sur le poids du liquide reçu, et en calculant le volume à partir de la densité et du poids reçu ; et
émettre un signal d'arrêt vers le distributeur (2) pour provoquer l'interruption de l'écoulement du liquide lorsqu'il est déterminé, par le processeur, au niveau du réceptacle (12), sur la base du poids du liquide reçu, qu'un volume prédéterminé du liquide spécifique à la taille du réceptacle a été reçu dans le réceptacle (12).

6. Procédé selon la revendication 5, comprenant l'étape consistant, avant de recevoir du liquide dans le réceptacle (12), à émettre un signal de démarrage du réceptacle (12) vers le distributeur (2) pour provoquer le début de l'écoulement du liquide.

7. Procédé selon l'une quelconque des revendications précédentes, comprenant l'étape consistant à recevoir une entrée d'utilisateur qui sélectionne un paramètre de liquide du liquide à distribuer.

8. Procédé selon l'une quelconque des revendications précédentes, comprenant les étapes consistant à :
recevoir, d'un émetteur sur le réceptacle (12), un identifiant d'utilisateur qui identifie l'utilisateur ;
émettre, du réceptacle (12) vers le distributeur (2), des informations relatives à une quantité de liquide à consommer par l'utilisateur pendant une période prédéterminée ; et
fournir, à un utilisateur, une indication d'une quantité restante à consommer par l'utilisateur sur la base de la différence entre une quantité prédéterminée et tout volume déjà distribué pendant la période prédéterminée.

9. Réceptacle (12) pour une utilisation avec un système de distribution de liquide, comprenant un distributeur (2) qui peut être commandé pour distribuer un liquide dans le réceptacle (12), le réceptacle (12) étant mis en forme pour contenir à l'intérieur le liquide distribué, et comprenant :
un récepteur qui est agencé de manière à recevoir, du distributeur (2), une indication d'un paramètre de liquide d'un liquide à distribuer ;
une mémoire locale (34) qui stocke la densité de différents types de boissons ;
un capteur de poids (32) ;
un processeur qui est configuré pour déterminer le volume du liquide reçu du distributeur (2) au niveau du réceptacle (12), en ayant accès à la densité du liquide sur la base du paramètre de liquide issu de la mémoire locale (34), en recevant, du capteur de poids (32), des données sur le poids du liquide reçu, et en calculant le volume à partir de la densité et du poids reçu ; et
un émetteur qui est agencé de manière à émettre un signal d'arrêt vers le distributeur (2) pour provoquer l'interruption de l'écoulement du liquide lorsqu'il est déterminé, par le processeur, sur la base du poids du liquide reçu, qu'un volume prédéterminé du liquide spécifique à la taille du réceptacle a été reçu.

10. Réceptacle (12) selon la revendication 9, dans lequel l'émetteur peut fonctionner pour émettre un signal de démarrage vers le distributeur (2) pour provoquer le début de l'écoulement du liquide.

11. Réceptacle (12) selon la revendication 9 ou 10, comprenant un identifiant d'utilisateur qui n'identifie qu'un utilisateur du réceptacle (12), dans lequel l'émetteur peut fonctionner pour émettre, du réceptacle (12) vers le distributeur (2), des informations relatives à une quantité de liquide à consommer par l'utilisateur pendant une période prédéterminée.
